# EUROPEAN PATENT APPLICATION

(11) **EP 0 864 412 A2**
(43) Date of publication of application: **16.09.1998**
(21) Application number: 98103798.9
(22) Date of filing: 04.03.1998
(51) Int. Cl.: B29C 47/20, B29C 47/06, B29C 47/70

(54) **Annular extrusion head for the production of blown tubular films**

(30) Priority: 13.03.1997 IT MI970561; 28.01.1998 IT MI980157
(71) Applicant: Tecno Coating Engineering S.r.l., 28040 Marano Ticino, (NO) (IT)
(72) Inventor: Claudio, Gini, 28047 Oleggio (Novara) (IT)
(74) Representative: Savi, Alberto

(57) **Abstract**

An annular extrusion head for the production of tubular films, of a type comprising at least one cylindrical body (2) fitted on its surface with a number of adduction channels (6) for the molten material, esternally closed by a sleeve (1) inserted over said cylindrical body and ending in an extrusion chamber (4) equipped in its upper section with an annular gap (5) from which the product exits, in which the molten material is fed to said channels by a feeding conduit (3) wherein said feeding conduit is connected to the said adduction channels by a series of connecting channels (7) having a symmetrical tree-shaped structure leading to each branching off point, where said tree-shaped structure extends to the point of attaining a number of branches equal to the said adduction channels, so that the path of the material coming from the said feeding conduit is identical for all channels.

## Description

This invention proposes an annular extrusion head to be used in plants for the production of tubular blown film, conceived in a manner to ensure a regular flow of the material to be extruded, so as to guarantee a uniform film thickness.

As known, the extrusion heads for tubular films comprise two coaxial bodies with an annular gap, through which the film is extruded.

The internal body of an essentially cylindrical shape presents on its outer surface a system of feeding channels for the molten material, which evolve from the bottom toward the top and flow into an annular space or extrusion chamber, which communicates with the mentioned annular gap extruding the film.

Based on the known technology, this system of channels basically comprises a first channel evolving in a circular manner at the bottom of the inner body and sending out a number of channels at equal distances, which guide the molten material toward the extrusion chamber located in the upper section.

Because of the single inlet of the molten material, the material which happens to exit the channels farthest from this inlet must travel a longer distance and causes, due to its higher viscosity, pressure losses affecting the material's throughput. At the outlet this causes irregularities in the thickness of the film.

On the other hand, the ever more severe standards imposed by the users of these machines require that the extruded film possess on its entire perimeter a uniform thickness with a tolerance of only a few microns.

Consequently, it appears obvious that the flowrate of this fluid mass must be maintained as uniform as possible over the entire length of the gap.

In order to achieve a more uniform thickness, the extrusion heads are currently equipped with a number of electrical resistances distributed along the perimeter and controlled by probes, each capable of heating a restricted section of the metallic cylinder constituting the head and thus to locally affect the temperature of the molten mass to provide an even flowrate and thereby a uniform thickness along the full gap.

These resistances are controlled by appropriate temperature sensors governed by on/off regulating devices.

However, it was found that this solutions cannot always guarantee the desired results and at any rate, that it involves considerable constructive complications of the heads.

Moreover, it is economically inconvenient to increase the number of the sensors and resistances and to employ more appropriate regulating devices, for instance controlling devices of a proportional type, as this would mean a heavy increase of the equipment costs, as well as considerable constructive and handling complications of the same.

The scope of this invention is to create an annular extrusion head capable of ensuring an essentially uniform flowrate of the film over its entire surface, so as to eliminate any upstream causes of irregularity and make it possible to provide a few simple adjustments to achieve a constant and uniform extrusion film.

The purpose of this invention is therefore to create an annular extrusion head for the production of film materials capable of allowing a reduction of the transversal thickness variations of the produced film, having a simpler structure than those known, ensuring lower production costs and greater handling ease.

This purpose is achieved by providing an annular extrusion head for the production of tubular films of a type comprising a cylindrical body fitted with number of surface channels to allow the throughput of the molten material and a chamber inserted around said cylindrical body, in which the molten material is fed to the said channels from a feeding conduit, where the latter is connected to the said material adduction channels by a number of connecting channels in the shape of a tree symmetrically branching out to each of the outlets.

These and other characteristics will become clear from the following detailed description, provided as a non-limiting example with reference to the enclosed figures, in which:
- Figure 1 is a simplified prospective view of the internal body of an extrusion head according to the invention;
- Figure 2 illustrates, in a section taken along its axis, a possible version of the extrusion head according to the invention;
- Figure 3 is a section along the axis of the inner body of an extrusion head according to the invention;
- Figure 4 shows the development, on a plane, of the system of channels provided on the surface of the inner body of an extrusion head according to the invention.

With reference to the enclosed figures, the extrusion head according to the invention comprises a pair of coaxial concentric cylinders, one fitted inside the other, indicated by the numbers 1 (external body or sleeve) and 2, respectively (inner body).

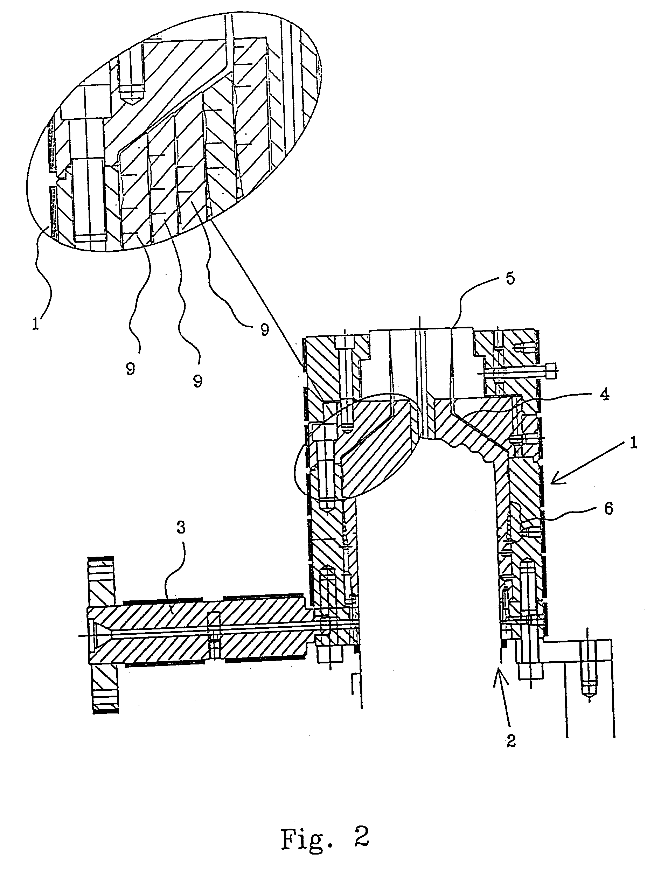

The outer surface of the inner body carries a series of flow channels 6 through which the material, coming from a fitting identified by the number 3 in Figure 2, rises to reach an extrusion chamber 4 having in its upper part an annular gap 5 through which the tubular material exits.

In particular, in order to ensure a proper uniformity of flow toward the extrusion chamber 4, it is appropriate that the conduits or channels carrying the material to this chamber be numerous and arranged at a uniform distance.

Moreover, since the cross-section of these channels cannot suddenly decrease as they proceed toward the extrusion chamber, they must have have a certain length and are therefore built along a helical path.

It is therefore necessary to provide for a number of branches which will in this description be further described as "connecting channels" to distinguish them from the helical channels, which allow the material to flow from the single feeding inlet to all the helical channels.

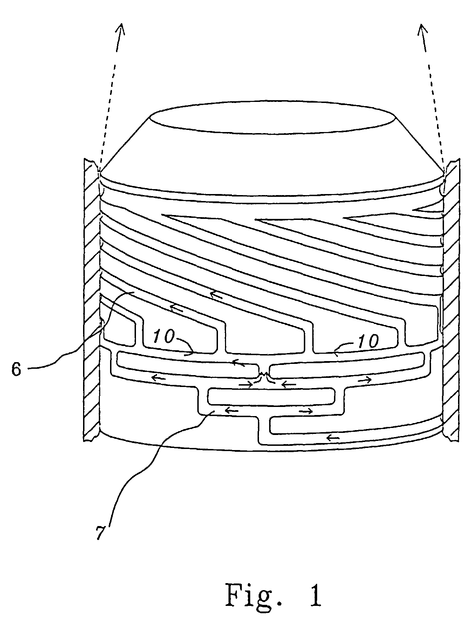

The outer body 2 may be a single body, fitted with the channels 6 on the outer surface (Figure 1), or be in turn constituted by a number of concentric cylinderical bodies (Figure 2), each of which carries on its surface a number of channels externallylimited by the inner surface of the outer body.

For example, the extrusion head may comprise several concentric bodies 9, 9' and 9'', as shown in the detail of Figure 2.

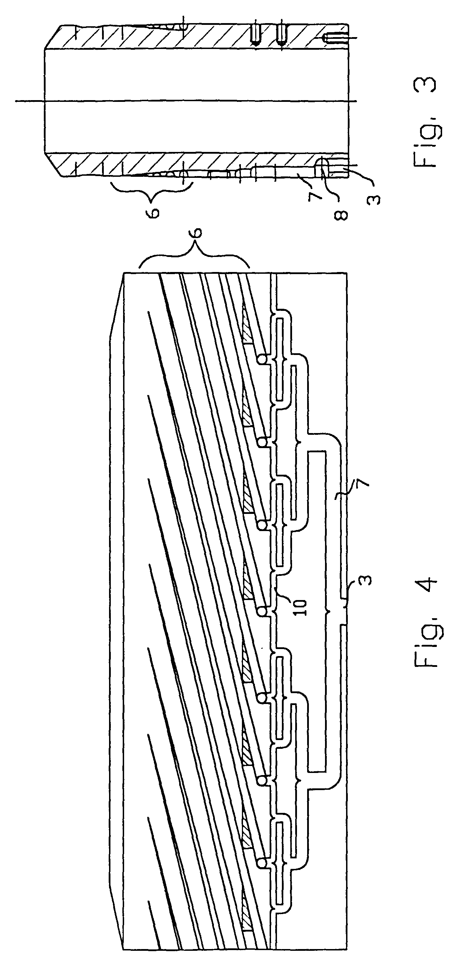

From the feeding conduit 3 the material then passes through the connecting channels shown by the number 7, until it reaches the helical channels, whose complex is shown by the numbers 6 in the figures 2 and 4. These channels evolve along a helical path opposite the upper part of the head, to finally exit in the extrusion chamber 4.

The system of connecting channels 7 evolves along a symmetrical tree-shaped structure with respect to each branching-off point 8, until it achieves a number of channels equal to the numer of helical channels connected to the extrusion chamber 4.

In this manner each of these spirals is reached by the material after flowing through equal stretches, as clearly shown in Figure 4, thus exposing it, at equal temperature conditions, to the same pressure drop at each point.

In other words, the molten mass arrives at the spirals at practically the same pressure and since even the length of the spirals is the same, finally reaches the extrusion chamber 4 and the exit gap 5 with a uniform pushing force along its entire perimeter.

A conduit is provided, shown in the figures by the number 10, which interconnects the helicoidal channels 6, preferably at their base, meaning opposite their connection to the connecting channels 7.

This solutions allows eliminating the eventual pressure differentials which may arise within the molten mass as a result of different pressure losses along its path, so that at the inlet to the helicoidal channels the molten mass finds itself at essentially identical pressure and viscosity conditions.

The solution described above thereby allows achieving an ideal flow distribution of the molten material arriving at the extrusion chamber 4, thus achieving an optimum set of conditions for the extrusion process.

The molten polymer arrives at the head by passing the inlet 3 and entering the connecting channels 7, branching out along a number of paths all having the same length, so that the material arrives at the start of each helicoidal channel after flowing through the same distance and therefore at an identical pressure on all the channels.

The same occurs when the head is composed of a number of concentric layers, each of which is crossed by a series of channels to pass the molten polymer.

The head may then eventually be completed by temperature regulating devices, the latter being of a known type, which allow taking a local action to apply eventual changes and/or corrections to the flow of the material.

A specialist in the trade may then provide numerous changes and variants, which must however all be considered to fall within the field of this invention.

## Claims

1. An annular extrusion head for the production of tubular films, of a type comprising at least one cylindrical body fitted on its surface with a number of adduction channels for the molten material, esternally closed by a sleeve inserted over said cylindrical body and ending in an extrusion chamber equipped in its upper section with an annular gap from which the product exits, in which the molten material is fed to said channels by a feeding conduit, characterised by the fact that said feeding conduit is connected to the said adduction channels by a series of connecting channels having a symmetrical tree-shaped structure leading to each branching off point, where said tree-shaped structure extends to the point of attaining a number of branches equal to the said adduction channels, so that the path of the material coming from the said feeding conduit is identical for all channels.

2. An extrusion chamber according to claim 1, characterised by the fact that it provides a conduit interconnecting all the mentioned helical channels, so as to eliminate any pressure differentials in the molten material.

3. An extrusion chamber according to claim 2, characterised by the fact that the said conduit interconnecting the said helical channels is placed opposite the lower end of said helical channels, where these interconnect to the connecting channels 7.

4. An extrusion head according to claim 1, characterised by the fact that said adduction channels are constituted by channels having a helical path.

5. An extrusion head according to claim 1, in which said channels having a helicoidal path have a decreasing cross section beginning from the inlet and in the direction toward said extrusion chamber.

6. An extrusion head according to claim 2, characterised by the fact that it provides means for a local regulation of the temperature of the material flowing through the said channels.

7. An annular extrusion head for the production of tubular films according to claim 1, characterised by the fact that it provides several concentric layers, each equipped with channels according to any of the claims from 1 to 5.
